# EUROPEAN PATENT SPECIFICATION

(11) **EP 1 555 746 B1**
(45) Date of publication and mention of the grant of the patent: **23.06.2010**
(21) Application number: 05400002.1
(22) Date of filing: 11.01.2005
(51) Int. Cl.: H02M 7/48, H02J 3/38

(54) **System interconnection inverter device**
Wechselrichtervorrichtung für Systemverbindung
Dispositif onduleur pour interconnexion de système

(30) Priority: 13.01.2004 JP 2004005187
(43) Date of publication of application: 20.07.2005
(73) Proprietor: SANYO ELECTRIC CO. LTD, Moriguchi-shi, Osaka-fu (JP); SANYO AIR-CONDITIONERS CO., LTD., Ora-gun, Gunma-ken (JP)
(72) Inventor: Makino, Yasuhiro, Oosato-gun, Saitama (JP); Madenokoji, Masaki, Honjyo-shi, Saitama (JP); Kawada, Tadamasa, Ora-gun, Gunma (JP)
(74) Representative: Fuhlendorf, Jörn

(56) References cited:
- US-A- 5 627 737
- US-A- 5 680 302
- US-A1- 2002 149 950

## Description

### BACKGROUND OF THE INVENTION

### Field of the Invention

The present invention relates to a system interconnection inverter device, and more particularly pertains to such an inverter device which is arranged to convert power generated by power generating means such as a solar battery to power adaptable for a system power supply such as commercial power source, and regenerate such converted power to the power supply.

### Description of the Related Art

In recent years, regeneration of power generated using solar light to a commercial power source is becoming widespread. When regenerating the generated power to a commercial power supply, an inverter device (a system interconnection inverter device) is employed which is arranged to convert generated DC power to AC power which is commensurate in frequency and voltage with a commercial power supply, by virtue of the on/ off operation of switching elements.

Such a system interconnection inverter device includes an inverter circuit formed by connecting switching elements in the form of a bridge, for example, wherein the on-time (on-duty) of the switching elements is set based on DC power inputted to the inverter circuit, thereby performing PWM control to cause the switching elements to be driven with the set on-time. In this manner, AC power whose current corresponds to the generated power is generated so as to be outputted (regenerated) to a system power supply via a protective relay or the like

Such PWM control is performed with a high carrier frequency of several kHz or higher.

The system interconnection inverter device includes a power supply (switching power supply) for generating, from generated power or power of a commercial power supply, power useful for driving switching elements and a variety of sensors (for example, see JP-A Nos. 2003-18749 and JP-A No. 2003-18750).

Further, in the system interconnection inverter device, a controller for controlling the operation of the device includes a microcomputer which controls opening/closing of a parallel off-relay. The microcomputer also monitors opening/closing of the parallel off-relay.

The monitoring of the opening/closing operation of the parallel off-relay is carried out in such a manner that a predetermined voltage is applied to wiring led out of the switching power supply and connected to an auxiliary contact of the parallel off-relay and the opening/closing of the parallel off-relay is detected from a signal outputted from a photocoupler provided on one of the wires.

Meanwhile, the inverter circuit for permitting the switching elements to be opened and closed is likely to generate an electromagnetic wave in response to the switching elements being driven. In addition, the switching power supply generating power for driving the switching elements is also likely to generate an electromagnetic wave.

For this reason, in a system interconnection system, various methods are employed to suppress electromagnetic wave which tends to be generated by an inverter circuit or a switching power supply per se.

A technical standard established by the Voluntary Control Council for Interference by Information Technology Equipment (VCCI) has been extensively used as a standard for suppression of electromagnetic wave, wherein in class 1 which is a standard class applicable to commercial and industrial areas, a permissible value for quasi-peak is set at 79 dBµv for a frequency range from 150 kHz to 500 kHz and at 73 dBµv for a frequency range from 500 kHz to 30 MHz.

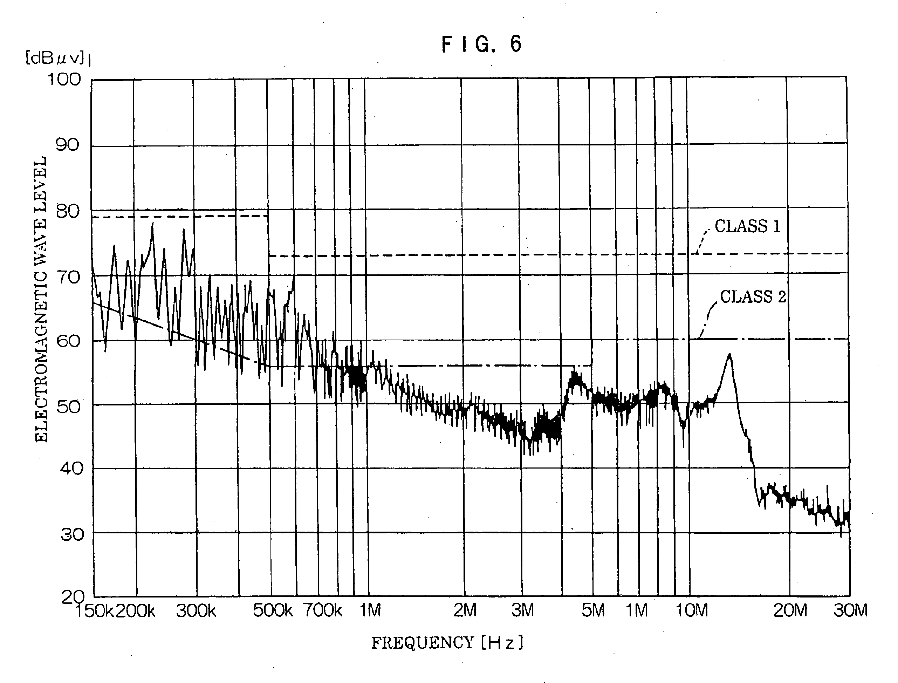

Fig. 6 illustrates an example of measurement result of electromagnetic wave level in a system interconnection inverter device arranged to suppress electromagnetic wave which is radiated directly from an inverter circuit or a switching power supply.

This measurement result sufficiently meets the requirements specified in class 1 of the VCCI technical standard and is at a practically problem-free level for use in commercial and industrial areas.

In recent years, widespread use of solar power generating apparatus in residences is desired, and in this regard, in the VCCI technical standard, a permissible value for quasi-peak of electromagnetic wave level in class 2 which is a standard class applicable to residential areas is set at 66-56 dBµv for a frequency range from 150 kHz to 500 kHz and at 60 dBµv for a frequency range from 5 MHz to 30 MHz.

For this reason, it is likely that a electromagnetic wave level in a radio broadcast band is within a permissible range in class 1 while it exceeds a permissible value in class 2. Thus , a problem tends to arise that a noise due to electromagnetic wave generated by a system interconnection inverter device appears as a radio noise.

US 2002/0149950 A1 discloses a system interconnection inverter device according to the preamble of claim 1.

### SUMMARY OF THE INVENTION

The present invention has been made in view of the foregoing, and has for an object to provide an improved system interconnection inverter device. The object is solved by the features of claim 1.

The system interconnection inverter device for converting DC power to AC power commensurate in voltage and frequency with a commercial power supply and regenerating the AD power to the commercial power supply comprises: a switching circuit for converting DC power to AC power because of a switching element being switching-driven; means for generating a switching signal for setting drive-timing of the switching element; a switching control unit for driving the switching element with a carrier of a predetermined frequency based on the switching signal; and a power source unit for generating power for driving the switching element and the switching control unit; the system interconnecting inverter device being characterized by a filter circuit having a stop band in which the carrier frequency and a higher harmonic of the carrier frequency are included, the filter circuit being provided in a wiring forming a loop led out of the power source unit and returned to the power source unit via a predetermined contact, the wiring being led out of the filter circuit and connected to the predetermined contact. A filter circuit is provided in a wiring which is led out of the power supply unit and connected to a relay contact in the device, and the wiring connected to the filter circuit is tied to a contact in the device.

Although generally the level of a higher harmonics decreases as the order becomes higher, it is likely that an electromagnetic wave having a high level is produced even in a medium wave broadcast band since the carrier frequency is high. In order to address this situation, a filter circuit having a stop band in which the carrier frequency is included is provided.

Consequently, a loop which is formed by the wiring when the contact is closed becomes an antenna and thereby prevents a higher harmonic of the carrier frequency flowing in the wiring from being emitted as an electromagnetic wave.

In addition the system includes a feature such that when a parallel off-relay is provided between the inverter circuit and the commercial power supply, the parallel off-relay being arranged to connect between the inverter circuit and the commercial power supply via contacts thereof, the filter circuit is provided in the wiring connecting between one of the contacts of the parallel off-relay and the power source unit.

When opening/closing of the parallel off-relay is detected using an auxiliary contact provided in the parallel off-relay, the filter circuit is provided in the wiring connecting between the power supply unit and the auxiliary contact of the parallel off-relay, thereby preventing an electromagnetic wave from being emitted from the wiring. Further embodiments are stated according to the features of claims 2 and/or 3.

Further, although there is generally a tendency that if the carrier frequency or a higher harmonic of the carrier frequency flows in the wiring, the level of an electromagnetic wave resulting from the carrier frequency is increased in accordance with the output power of the inverter circuit, suppression of such an electromagnetic wave can be achieved.

It is preferable that the carrier frequency be higher than or equal to several kHz. It is also preferable to achieve suppression of an electromagnetic wave level in a frequency range from 100 kHz to 1MHz, preferably lower than or equal to 2 MHz.

In the present invention, the filter circuit is configured using a troidal core having an inductance of several 100 mH or lower, thereby decreasing the manufacturing cost.

As will be appreciated, according to the present invention, a filter circuit is provided in a loop-formable wiring which is led out of a power source unit connected to a contact, thereby positively preventing an electromagnetic wave corresponding to the carrier frequency from being emitted from the wiring and becoming a radio noise or the like.

### BRIEF DESCRIPTION OF THE DRAWINGS

Fig. 1 is a schematic diagram illustrating a solar generator applied in an embodiment of the present invention.
Fig. 2 is a functional block diagram illustrating a schematic arrangement of a switching control section incorporated in an inverter device.
Fig. 3 is a schematic circuit diagram showing a connection of a parallel off-relay applied in the embodiment of the present invention and a switching power supply.
Fig. 4 is a circuit diagram illustrating an example of filter circuit.
Fig. 5 is a graph showing a measurement result of the electromagnetic wave level in the inverter device according to the present embodiment in which a filter circuit is connected between an inverter power supply and an auxiliary contact of a parallel off-relay.
Fig. 6 is a graph showing a measurement result of the electromagnetic wave level in a conventional inverter device in which no filter circuit is connected between an inverter power supply and an auxiliary contact of a parallel off-relay.

### DETAILED DESCRIPTION OF THE INVENTION

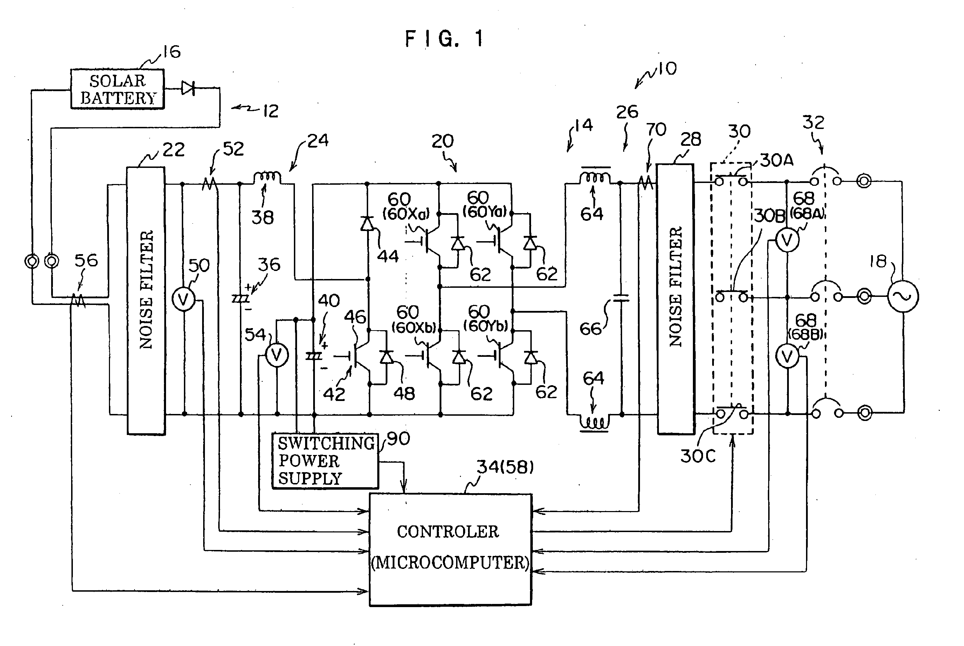

With reference to the drawings, description will now be made of an embodiment of the present invention. Fig. 1 shows a schematic arrangement of a solar power generating apparatus 10 including a system interconnection inverter device according to the embodiment of the present invention.

The solar power generating apparatus 10 includes a power generating unit 12 and a system interconnection inverter device (hereinafter, referred to as inverter device 14). In the power generating unit 12, a solar battery 16 is provided which is constituted by a solar cell array comprising a multiplicity of solar battery cells, and is adapted to receive solar light, thereby generating direct current power in accordance with the amount of light received.

The power (DC power) generated by the solar battery 16 is passed to the inverter device 14. Although in this embodiment, the power generation unit 12 using the solar battery 16 is described by way of example, it is to be understood that the present invention is by no means limited thereto, and is capable of employing any suitable type of power generating device or direct current power supply in so far as it is arranged to provide DC power to the inverter device 14.

The inverter device 14 includes an inverter circuit 20 to which the power generated by the power generating unit 12 is provided via a noise filter 22 and a voltage booster circuit 24, Further, the inverter device 14 includes a current smoothing circuit 26, a noise filter 28, and a parallel off-relay 30, which are provided at the output side of the inverter circuit 20 in the named order, so that power derived from the inverter circuit 20 is provided (regenerated) to a commercial power system 18 via the parallel off-relay unit 30 and a protective relay 32

In this embodiment, AC power is regenerated to the commercial power system 18 which is a single-phase three-wire system, by way of example. The inverter device 14 is arranged such that the power generated by the power generating unit 12 is converted to AC power having a phase, frequency and voltage compatible with this commercial power system 18, and then regenerated to the commercial power system 18. Further, the inverter device 14 includes a controller 34 for controlling the operation thereof.

DC power generated by the power generating unit 12 (see Fig. 1) is passed to the voltage booster circuit 24 via the noise filter 22. The voltage booster circuit 24 includes a smoothing condenser 36, a choke coil 38, a condenser 40, a switching circuit 42, and a diode 44. The DC power is smoothed by the smoothing condenser 36, and then passed to the choke coil 38 and switching circuit 42.

The switching circuit 42 is comprised of a switching element 46 and a diode 48. The switching element 46 is controlled in driving (on/off) operation by the controller 34. The switching element 46 may comprise a power transistor, power MOSFET or an insulated gate bipolar transistor (IGBT).

The switching circuit 42 is arranged such that a voltage obtained by boosting an input voltage appears across the choke coil 38 due to the switching (on/off) operation of the switching element 46. The boosted power appearing across the choke coil 38 is then stored at the condenser 40. The diode 44 serves to prevent counter flow of the boosted power.

A generated power voltage detecting sensor 50 and a generated power current detecting sensor 52 are provided between the noise filter 22 and the voltage booster circuit 24. A boosted voltage detecting sensor 54 is provided in the voltage booster circuit 24. The generated power voltage detecting sensor 50, generated power current detecting sensor 52 and boosted voltage detecting sensor 54 are each connected to the controller 34.

The generated power voltage detecting sensor 50 and boosted voltage detecting sensor 54 each includes an isolation amplifier, for example. The generated power voltage detecting sensor 50 is adapted to detect a voltage (DC voltage) which is generated by the power generating unit 12 (solar battery 16) and then passed to the voltage booster circuit 24, and the boosted voltage detecting sensor 54 is adapted to detect a voltage boosted by the voltage booster circuit 24. A voltage detected by the boosted voltage detecting sensor 54 will be a boosted voltage derived from the voltage booster circuit 24.

The generated power current detecting sensor 52 may include a current transformer (CT), for example, for the purpose of detecting a current (DC current) which is generated by the power generating unit 12 and then passed to the voltage booster circuit 24.

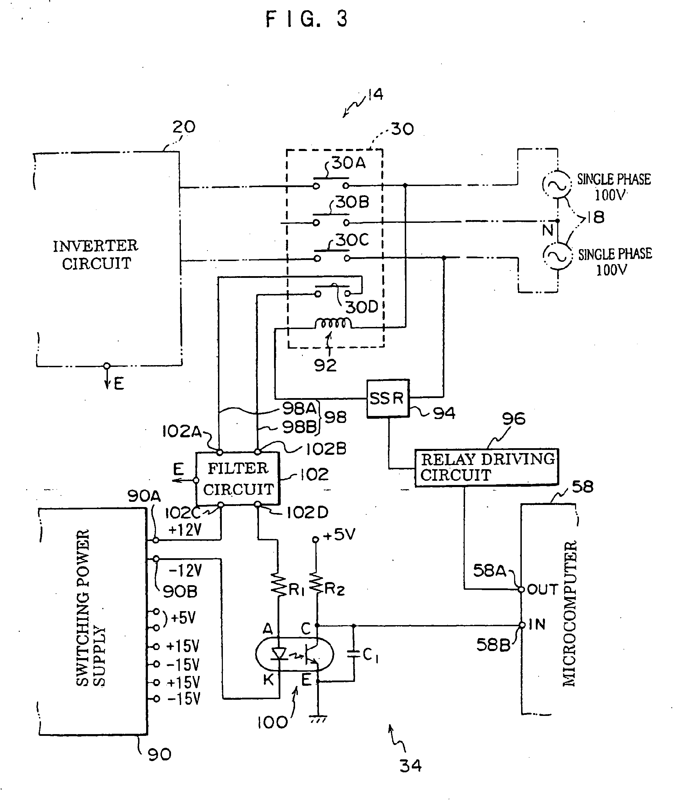

The controller 34 comprises a microcomputer indicated at 58 in Fig. 3 and is adapted to cause the switching element 46 to be driven based on the magnitudes of voltage and current which are detected by the generated power voltage detecting sensor 50 and generated power current detecting sensor 52 respectively. At this point, the controller 34 performs a control such that a certain boosted voltage can be obtained by adjusting the on time (on duty) of the switching element 46.

More specifically, when the system voltage of the commercial power system 18 is 200 V, the crest value (peak value) becomes approximately ± 280 V, and therefore the boosted voltage at the voltage booster circuit 24 should exceed the absolute crest value (about 280 V) of the commercial power system 18. Thus, the controller 46 controls the on/off operation of the switching element 46 so that such a voltage can be obtained.

Meanwhile, it is arranged such that the actual boosted voltage at the voltage booster circuit 24 is 20-30 V higher than 280 V, taking into consideration losses which tend to occur at the inverter circuit 20, current smoothing circuit 26 and the like

Further, in the solar power generating apparatus 10 applied in this embodiment, a current sensor 56 including a current transformer (CT) for example is provided between the power generating unit 12 and the noise filter 22. The controller 34 is arranged to detect ground fault of power generated by the power generating unit 12, using the current sensor 56.

The inverter circuit 20 includes a plurality of switching elements 60 which are connected in the form of a bridge. The inverter circuit 20 further includes diodes (flywheel diodes) 62 provided for the respective switching elements 60.

The solar power generating apparatus 10 is arranged such that power generated is provided to the commercial power system 18 which is a single-phase three-wire system. To this end, four switching elements 60Xa, 60Xb, 60Ya, and 60Yb (hereinafter, referred generally to as "switching elements 60") are connected in the form of a bridge.

Preferably, each of the switching elements 60 may comprise any suitable type of semiconductor element such as a power transistor, a power MOSFET, and an insulated gate bipolar transistor (IGBT).

The controller 34 controls the on/off operation of the switching elements 60 so as to convert DC power provided by the voltage booster circuit 24 to AC power adaptable to the commercial power system 18. In this case, the controller performs the control such that DC power provided by the voltage booster circuit 24 is converted to AC power having a voltage corresponding to the system voltage of the commercial power system 18 with a sinusoidal waveform which corresponds in phase and frequency to AC power of the commercial power system 18.

More specifically, in the inverter circuit 20, DC power coming out of the voltage booster circuit 24 is pulse-width modulated so as to be converted to AC power because of the switching elements 60 being turned on and off. At this point, the controller 34 controls the on time of the switching elements 60 so that the waveform of AC power (AC voltage) coming out of the inverter circuit 20 conforms to the AC voltage waveform of the system voltage at the commercial power system 18.

The current smoothing circuit 26 comprises reactors 64 and a condenser 66 and serves to smooth out AC power current coming out of the inverter circuit 20. AC power whose current has been smoothed out by the current smoothing circuit 26 in turn is outputted to the commercial power system 18 via the noise filter 28, the parallel off-relay 30, and the protective relay 32.

Between the parallel off-relay 30 and the protective relay 32 are provided system voltage sensors 68 which are adapted to detect the system voltage and connected to the controller 34. The inverter device 14 includes additional system voltage sensors 68A and 68B (hereinafter, referred to generally as "system voltage sensors 68") which are provided between each of the two power lines and the ground line, thereby detecting the system voltage for each phase of the single-phase three-wire system.

The system voltage sensors 68(68A, 68B) include an isolation amplifier, for example, and provide the controller 34 with a voltage corresponding to the system voltage of the commercial power system 18

Further, the inverter device 14 includes an output current detecting sensor 70 provided between the current smoothing circuit 26 and the noise filter 28. The output current detecting sensor 70 includes a current transformer, for example, and is connected to the controller 34 which detects an output current derived from the inverter circuit 20 via the current smoothing circuit 26.

The controllers 34 controls the duty ratio (on duty) of a switching signal to be used for driving the switching elements 60 incorporated in the inverter circuit 20, on the basis of generated power detected by the generated power voltage detecting sensor 50 and the generated power current detecting sensor 52 and the system voltage detected by the system voltage detecting sensors 68.

At this point, the controller 34 generates a switching signal in conformity to the phase (zero cross) of the system voltage, from variations in the system voltage detected by the system voltage detecting sensors 68. Further, the controller 34 sets a target value for the output current based on power generated, and performs a feedback control so that the output current detected by the output current detecting sensor 70 becomes the target value..

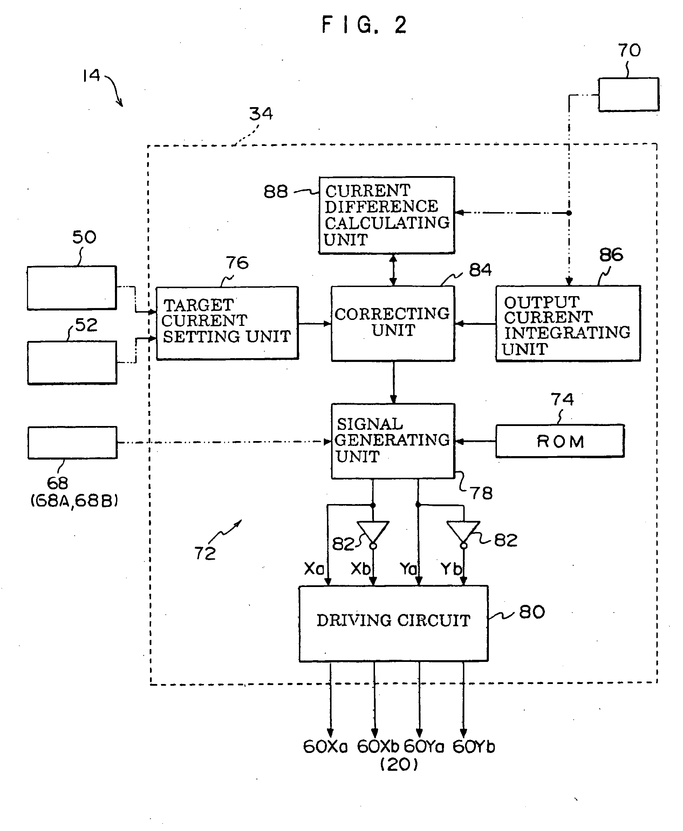

That is, as shown in Fig. 2, the controller 34 includes a switching controlling section 72 which provides a switching signal for obtaining a sinusoidal signal based on the PWM principle.

This switching controlling section 72 includes a ROM 74 in which data for generating a sinusoidal current waveform (on/off signal pattern) is prestored (hereinafter, the data prestored will be referred to as "ROM data"). The switching controlling section 72 further includes a target current setting unit 76 and a signal generating unit 78.

The target current setting unit 76 sets a target current to be derived from the inverter device 14, based on a detection value (power generated) of the generated power voltage detecting sensor 50 and generated power current detecting sensor 52.

The signal generating unit 78 reads out ROM data from the ROM 74, and generates a switching signal based on the ROM data and the target current set by the target current setting unit 76. At this point, the signal generating unit 78 also generates a switching signal based on the system voltage and phase detected by the system voltage detecting sensor 68.

The controller 34 further includes a driving circuit 80 for driving the switching elements 60. The switching signals generated by the signal generating unit 78 are passed to the driving circuit 80.

The signal generating unit 78 is arranged such that the switching signals have a carrier frequency fc which is higher than or equal to 10 kHz, e.g., in the range from 15 kHz to 20 kHz. In this embodiment, the carrier frequency fc of the switching signals is set at 17.5 kHz (fc = 17.5 kHz), by way of example, and the switching elements 60 are driven by switching signals generated on the basis of such carrier frequency.

The ROM data is set based on a predetermined current waveform including no DC component like a sinusoidal waveform. The signal generating unit 78 generates switching signals in accordance with the ROM data and the phase and system voltage for a frequency fs (for example, fs = 50 Hz) of the commercial power system 18 (see Fig. 1).

The ROM 74 stores , for example, 720 pieces of data as ROM data for one periodic cycle of the switching signal. For the commercial power system 18 with a power supply frequency fs of 50 Hz, for example, 220 pieces of data are read out, and switching signals are generated sequentially.

The signal generating unit 78 outputs a switching signal Xa to be used for driving one of the switching elements 60 (for example, the switching element 60Xa) and a switching signal Ya shifted in phase by 180° relative to the switching signal Xa.

The driving circuit 80 is provided as inputs with these switching signals Xa, Ya, and switching signals Xb, Yb resulting from inversion of the switching signals Xa, Ya by inserters 82. The driving circuit 80 drives the switching elements 60 (60Xa, 60Xb, 60Ya, 60Yb) connected in the form of a bridge, based on these switching signals Xa, Xb, Ya, Yb, respectively.

In this manner, AD power conforming in frequency, phase and voltage to the commercial power system 18 is outputted from the inverter circuit 20.

The switching controlling section 72 includes a correcting unit 84 and an output current integrating unit 86. A target current set by the target current setting unit 76 is passed to the signal generating unit 78 via the correcting unit 84.

The output current integrating unit 86, which receives, as an input, an output current detected by the output current detecting sensor 70, reads in the output current in a predetermined sampling time and integrates the output current for one periodic cycle (for example, for one periodic cycle of the system voltage).

The correcting unit 84 reads in the integrated value of the output current integrated for one periodic cycle by the output current integrating unit 86, and determines whether a DC component is contained in the output current detected by the output current detecting sensor 70. If the result of the determination is positive, the correcting unit corrects the switching signals based the integrated value of the output current.

For example, if a positive DC component is contained in the output current, the integrated value is positive so that either the target current or the ROM data is corrected so as to decrease the positive current component. On the other hand, if a negative DC component is contained in the output current, the integrated value is negative so that either the target current or the ROM data is corrected so as to decrease the negative current component. In this manner, power containing a DC component is prevented from being outputted from the inverter device 14.

The switching controlling section 72 further includes a current difference calculating unit 88 to which an output current (an instantaneous value of the output current) detected by the output current detecting sensor 70 is inputted. The current difference calculating unit 88 calculates a difference between an instantaneous value of the target current and an instantaneous value of the output current (hereinafter, referred to as "difference between the target current and the output current") and outputs a result of the calculation to the correcting unit 84. Specifically, the current difference calculating unit 88 calculates the current difference while carrying out sampling at a rate of 200 times/sec for the commercial power system 18 with the frequency fs of 50 Hz.

The correcting unit corrects the target current based on the difference between the target current and the output current. Thus, the output current is feedback-controlled so that the output current of the inverter device 14 becomes the target current, thereby eliminating a higher harmonic wave from output power. That is, if a higher harmonic wave is contained in the output current, the difference between the target current and the output current is increased. By decreasing the difference between the target current and the output current at this point, the higher harmonic component can be eliminated from the output current.

Meanwhile, the target current setting unit 76 is arranged to renew the target current (target current value),while tracking changes in power generated, so that a maximum output efficiency can be obtained even when the power generated by the power generating unit 12 is lower than a rated power (maximum power point control: MPPT control) Such MPPT control uses a conventional well-known technique, and therefore a detailed description thereof will be omitted here.

The controller 34 having the parallel off-relay 30 connected thereto as shown in Fig. 1 is adapted, when the solar battery 16 (power generating unit 12) is either generating only a small amount of power or generating no power, to deactivate the inverter device 14 while at the same time disconnecting the inverter device 14 from the commercial power system 18 by means of the parallel off-relay 30.

Further, the controller 34 is adapted, when the power generated by the power generating unit 12 exceeds a predetermined value, to cause the parallel off-relay 30 to be closed so that the inverter device 14 is connected to the commercial power system 18.

Still further, the controller 34 is adapted, when a voltage increase/ decrease and/or a frequency increase/ decrease at the commercial power system 18 is detected using the system voltage detecting sensors 68, to provide a system interconnection protection such that the parallel off-relay 30 is opened so that the inverter device 14 is disconnected from the commercial power system 18.

Furthermore, the controller 34 stores a setting value which is preset for the purpose of providing a system interconnection protection based on the setting value. In addition, the controller 34 (switching controlling section 72) is arranged to monitor the system voltage by means of the system voltage detecting sensor 70, and when an increase occurs in the system voltage, to make refinement or narrowing-down so as to lower the target current value which is the target value for the output current. At this point, if the increase in the system voltage is not eliminated despite the refinement or narrowing-down made until the target current comes to have a predetermined value, then a countermeasure such as stopping the driving of the switching elements 60 may be resorted to.

The inverter device 14 includes a switching power supply 90 which provides driving power to the microcomputer 58 of the controller 34, the various sensors, the switching elements 42, 60 and so forth.

In the inverter device 14, the switching power supply is connected at the primary side (power source side) across the condenser 40 incorporated in the voltage booster circuit 24.

Thus, when the power generating unit 12 is in a generating state, power having a predetermined voltage inputted from the power generating unit 12 and then boosted up in the voltage booster circuit 24 is supplied to the switching power supply 90.

When the power generated by the power generating unit 12 is lower than a predetermined value, the switching elements 46, 60 are stopped from being driven so that AC power inputted from the commercial power system 18 is smoothed out by being full-wave rectified by the diodes 62 of the inverter circuit 20 and stored at the condenser 40. In this manner, power supplied from the commercial power system 18 is supplied to the switching power supply 90.

Although in this embodiment, by way of example, the power generated by the power generating unit 12 is supplied from the voltage booster circuit 24 to or power is supplied from the commercial power system 18 to the switching power supply 90, the present invention is by no means limited thereto, and it is possible that the switching power supply 90 may be connected to receive power only from the commercial power system 18.

The switching power supply 90 is arranged to stabilize power inputted thereto and provides a power source (for example, power source of ±12 V) for driving the various relays, a power source (for example, a power source of ± 5 V) for operating the various sensors, a power source (for example, a power source of ± 5 V) for the microcomputer 58 incorporated in the controller 34, and a power source (for example, and power source of ±12 V) for driving the switching elements 46, 60 (see Fig. 3).

As shown in Fig. 3, the parallel off-relay 30 includes a coil 92 which when energized, causes contacts 30A, 30B and 30C to be closed so that the inverter device 14 is connected to the commercial power system 18.

The inverter device 14 is adapted to receive power from the commercial power system 18 for energizing the coil 92 of the parallel off-relay 30, which coil 92 is connected to the commercial power system 18 via a relay such as a solid-state relay (SSR) 94. In this embodiment, it is arranged such that by way of example, the coil 92 of the parallel off-relay 30 is activated with AC 200 V.

Further, the controller 34 includes a relay driving circuit 96 connected to an output terminal 58A of the microcomputer 58. The microcomputer 58 outputs an opening/closing signal for the parallel off-relay 30 from the output terminal 58A to the relay driving circuit 96.. The relay driving circuit 96 on-off drives the SSR 94 based on the opening/closing signal, and opens and closes the contacts 30A-30C of the parallel off-relay 30 in unison.

Further, the parallel off-relay 30 includes an auxiliary contact 30D which is opened and closed in unison with the contacts 30A-30C. The microcomputer 58 confirms the operating state of the parallel off-relay 30 using the auxiliary contact 30D.

A wiring 98 is connected to the auxiliary contact 30D of the parallel off-relay 30. One wire of the wiring 98 (wire 98A) is tied to the switching power supply 90, and the other wire (wire 98B) is coupled to the switching power supply 90 via a resistor R1 and a photocoupler 100.

In this manner, when the auxiliary contact 30D of the parallel off-relay 30 is closed, a predetermined voltage is applied between an A (anode) terminal and a K (cathode) terminal of the photocoupler 100, thereby turning on the photocoupler 100.

The photocoupler 100 has a C (collector) terminal connected to an input terminal 58B of the microcomputer 58 so that an input voltage at the input terminal 58B is changed (for example, from about 5 V to about 0 V). as a result of the photocoupler 100 being turned on.

Consequently, the microcomputer 58 is now ready to be able to determine, from a voltage or a change in voltage at the input terminal 58B, whether the contacts 30A-30D of the parallel off-relay 30 are closed, that is, whether the parallel off-relay 30 is properly operated in accordance with a opening/ closing signal outputted from the output terminal 58A.

Meanwhile, the inverter device 14 includes a filter circuit 102 provided in the wiring 98 connected to the auxiliary contact 30D of the parallel off-relay 30. Conversely, the wiring 98 is led out of the filter circuit 102 and connected to the auxiliary contact 30D of the parallel off-relay 30.

More specifically, the wiring 98A, 98B are connected to terminals 102A, 102B of the filter circuit 102 respectively. A terminal 102C of the filter circuit 102C is tied to a terminal 90A of the switching power supply 90, and a terminal 102B thereof is connected to the resistor R1 and to a terminal 90B of the switching power supply 90 via the resistor R1 and photocoupler 100.

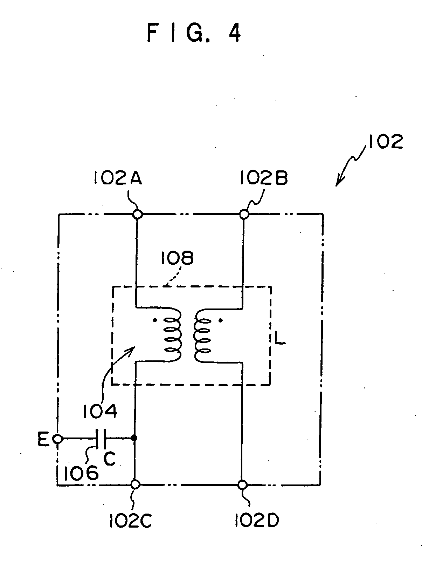

Fig. 4 illustrates an example of the filter circuit 102, which has a simplified configuration using a troidal coil 104 and a condenser 106.

The troidal coil 104 uses a troidal core 108 formed of a magnetic material such as amorphous and ferrite so as to have a predetermined inductance L. As the condenser 106, use is made of a condenser having a predetermined capacitance C and a withstand voltage of 2000 V.

In the filter circuit 102, the inductance L and capacitance C are set such that the corner frequency f becomes lower than the carrier frequency fc (in this embodiment, for example, fc = 17.5 kHz) (f<fc).

Differently stated, the filter circuit 102 is arranged such that it has a pass-band lower than the carrier frequency fc of the switching signal and a stop-band including the carrier frequency fc.

With the arrangement described above, in the inverter unit 14, a carrier signal and a higher harmonic wave of the carrier signal can be prevented from flowing to the wiring 98 connecting the switching power supply 90 to the auxiliary contact 30D of the parallel off-relay 30.

In the inverter device 14 adapted for use in this embodiment, it is arranged such that the corner frequency falls within a range from several 10 to several 100 Hz in contrast to the carrier frequency being 17.5 kHz.

In the filter circuit 102, in order to obtain this corner frequency f, the inductance L is set to be in a range from 10 mH to several 100 mH, and the capacitance C is set to be in a range from 100 pF to 1000 pF, wherein the inductance L is set to be lower than or equal to several 100 mH, thereby restraining the cost of the troidal coil 104. Another advantage is that the troidal coil 104 can be miniaturized and made to be inexpensive because of the fact that a current flowing therethrough is as low as several 10 mA. That is, simplification and cost reduction of the filter circuit 102 can be made.

In the solar power generating apparatus 10 including the inverter device 14 configured as mentioned above, the inverter device 14 is permitted to start operating when the power generated by the power generating unit 12 exceeds a predetermined value after power generation has been initiated by the solar battery 16.

When the power generated by the power generating unit 12 exceeds a preset value, the inverter device 14 closes the contacts of the parallel off-relay 30, and is connected to the commercial power system 18, while at the same time initiating switching of the switching element 46 provided in the voltage booster circuit 24 as well as switching of the switching elements 60 (60Xa, 60Xb, 60Ya, 60Yb).

In this manner, DC power inputted from the power generating unit 12 to the inverter device 14 is inputted to the inverter circuit 20 after having been boosted up to a predetermined voltage, and then converted to AC power, because of the switching elements being switched, so as to be regenerated to the commercial power system 18 via the parallel off-relay 30.

In the inverter device 14, opening and closing of the parallel off-relay 30 is controlled by means of the microcomputer 58. Further, in the microcomputer 58, confirmation is made as to whether the parallel off-relay 30 is properly opened and closed.

At this point, in the inverter device 14, a predetermined DC voltage generated by the switching power supply 90 is applied to the auxiliary contact 30D of the parallel off-relay 30 via the wiring 98, and the microcomputer 58 detects the opening/closing state of the parallel off-relay 30 via the photocoupler 100 which is operated in accordance with the opening/closing of the auxiliary contact 30D.

Due to the auxiliary contact being closed, the wiring 98 connecting between the switching power supply 90 and the auxiliary contact 30D of the parallel off-relay 30 define a loop between the terminal 90A and the terminal 90B of the switching power supply 90, and thus the wiring 98 functions as an antenna to radiate electromagnetic waves.

In the inverter device 14, on the other hand, the carrier frequency fc of the switching signal useful for driving the switching elements 60 is set at 17.5 kHz. If the switching signal having the carrier frequency fc or a higher harmonic wave thereof flows in the wiring 98, then a high-intensity noise is caused to occur in the radiobroadcast frequency band. Disadvantageously, it is most likely that such noise appears as a radio noise.

In order to address the above problems, the inverter device 14 uses the filter circuit 102 comprised of the troidal coil 104 and the condenser 106, through which the wiring 98 is connected to the switching power supply 90.

In the filter circuit 102, the corner frequency f is set to be lower than the carrier frequency fc, thereby restraining a signal having the carrier frequency fc and a higher harmonic wave thereof from flowing in the wiring 98.

Thus, even if a loop is formed by the wiring 98 connecting between the switching power supply 90 and the parallel off-relay 30 when the auxiliary contact 30D of the parallel off-relay 30 is closed, it is possible to surely prevent the carrier frequency fc and a higher harmonic wave thereof from being radiated as an electromagnetic wave from the loop.

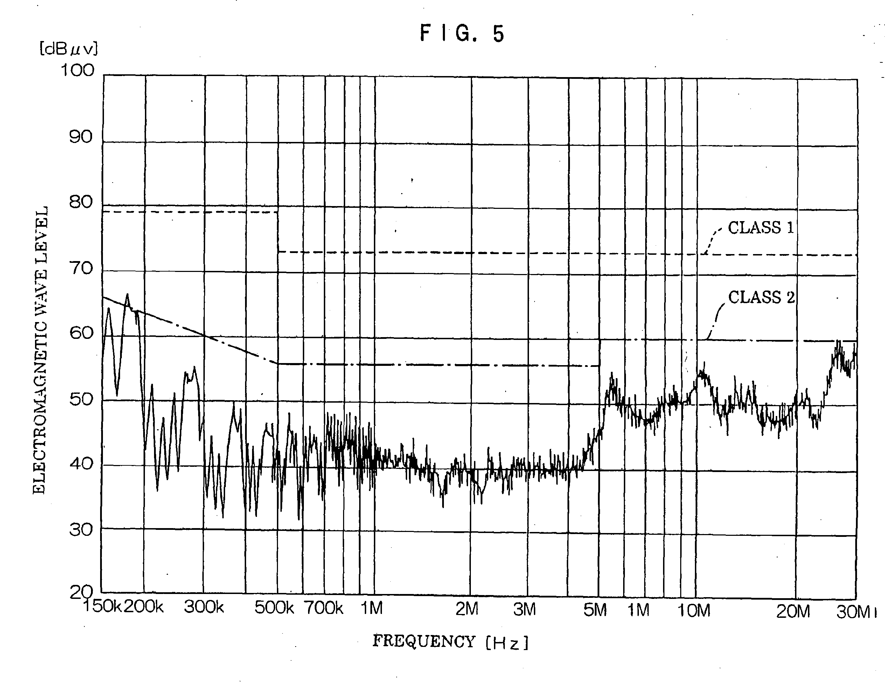

Fig. 5 illustrates a measurement result of electromagnetic wave levels in a frequency band from 150 kHz to 30MHz including the radio broadcast (medium wave radio broadcast) band in the inverter device 14 incorporating the filter circuit 102. Fig. 6 illustrates, as an object for comparison (conventional example), a measurement result of electromagnetic wave levels for a case where the filter circuit 102 is not provided.

Figs. 5 and 6 also illustrate a technical standard for self-regulation as established by the Voluntary Control Council for Interference by Information Technology Equipment (VCCI). According to the technical standard, a permissible value for the quasi-peak in Class 1 which is a standard classification for commercial and industrial area is specified as 79 dBµv for a range from 150 kHz to 500 kHz and as 73 dBµv for a range from 500 kHz to 30 MHz, as shown by dotted lines.

As shown in Figs. 5 and 6, the inverter device 14 satisfies the permissible value range as specified in Class 1 irrespective of whether or not the filter circuit 102 exists, and thus the solar power generating apparatus 10 can be installed in commercial and industrial areas.

On the other hand, a permissible value for quasi-peak in Class 2 which is a standard class for residential areas is specified as 66-56 dBµv for a range from 150 kHz to 500 kHz, as 56 dBµv for a range from 500 kHz to 5MHz, and as 60 dBµv for a range from 5 MHz to 30 MHz, as shown by dashed lines. In the technical standard, it is also specified that the permissible value varies linearly from 66 dBµv to 56 dBµv for a range from 150 kHz to 500 kHz.

As can be seen from Fig. 6, an inverter device including no filter circuit 102 generates electromagnetic waves higher in level than the permissible value in Class 2, for a range from 150 kHz to 1 MHz. That is, since the carrier frequency fc of the switching signal is high, a higher harmonics of the carrier frequency fc represents a high electromagnetic wave level until a frequency area exceeding 500 kHz is reached.

With the filter circuit 102, since the stop-band thereof includes the carrier frequency fc, it is possible to prevent the signal of the carrier frequency and a higher harmonics thereof from being picked up by the wiring 98.

This greatly decrease the electromagnetic wave level in a frequency area lower than or equal to 2 MHz , particularly in a frequency area from 100 kHz to 1 MHz, thereby preventing the electromagnetic wave level from exceeding the permissible value in Class 2, as shown in Fig. 5.

Thus, the provision of the filter circuit 102 permits the solar power generating apparatus 10 including the inverter device 14 to be installed in a residential area.

This embodiment described above places no limitation upon the structure of the present invention. Although, in this embodiment, the filter circuit 102 has been described by way of example, it is also possible that any type of filter circuit may be employed which is configured such that the stop-band thereof includes the carrier frequency fc of the switching signal.

Further, while in this embodiment, description has been made of the case where the filter circuit 102 is provided in the wiring 98 connecting between the switching power supply 90 and the auxiliary contact 30D of the parallel off-relay 30, it is to be understood that the present invention is by no means limited thereto, and that it is also possible that the filter circuit 102 may preferably be provided in wiring led out of the switching power supply or the like, which wiring form a loop.

Still further, while in this embodiment, description has been made of the case where the inverter device 14 is provided in the solar power generating apparatus 10, it should be understood that the present invention is equally applicable to an inverter device which is provided in any type of power supply configured to convert DC power to AC power, instead of in a solar power generating apparatus.

## Claims

1. A system interconnection inverter device (14) for converting DC power to AC power commensurate in voltage and frequency with a commercial power supply (18) and regenerating the AC power to the commercial power supply (18), comprising:
a switching circuit (20) for converting DC power to AC power because of a switching element (60) being switching-driven;
means (34, 78) for generating a switching signal for setting drive-timing of the switching element (60);
a switching control unit (34, 80) for driving the switching element (60) with a carrier of a predetermined frequency based on the switching signal; and
a power source unit (90) for generating power for driving the switching element (60) and the switching control unit (34, 80);
a filter circuit (102) having a pass-band lower than the carrier frequency (fc) of the switching signal the filter circuit (102) being provided in a wiring (98) forming a loop led out of the power source unit (90) and returned to the power source unit (90) via a predetermined contact (30D), the wiring (98) being led out of the filter circuit (102) and connected to the predetermined contact (30D);
a parallel off-relay (30) provided between the inverter circuit (20) and the commercial power supply (18) the parallel off-relay (30) being arranged to connect between the inverter circuit (20) and the commercial power supply (18) via contacts (30A-30D) thereof and the filter circuit (102) being provided in the wiring (98) connecting between one of the contacts (30A-30D) of the parallel off-relay (30) and the power source unit (90);
**characterized in that** opening and closing operation of the parallel off-relay (30) is controlled by means of a microcomputer (58) and that in the microcomputer (58) confirmation is made as to whether the parallel off-relay (30) is properly opened and closed, and
**characterized in that** the filter circuit (102) is configured to suppress an eletromagnetic wave having a frequency range from 100 kHz to 1MHz or preferably having a frequency of 2 MHz or lower.

2. The system interconnection inverter device according to claim 1, **characterized in that** for the opening and closing operation controlling an output terminal (58A) of the microcomputer (58) is connected with a relay driving circuit (96).

3. The system interconnection inverter device according to claim 1 or 2, **characterized in that** for properly opened and closed confirmation the wiring (98) being connected with one of the contacts (30A-30D) of the parallel off-relay (30) includes a photocoupler (100)being connected to an input terminal (58B) of the mircocomputer (58).

4. The system interconnection inverter device according to any of claims 1 to 3
**characterized in that** the carrier frequency is several kHz or higher.

5. The system interconnection inverter device according to claim 4, **characterized in that** the filter circuit (102) is configured using a troidal core (104) having an inductance of several 100 mH or less.

## Patentansprüche

1. Systemverbindungs-Wechselrichtervorrichtung (14), um Gleichstromleistung in Wechselstromleistung umzusetzen, die hinsichtlich Spannung und Frequenz mit einer Netzstromversorgung (18) verträglich ist und die Wechselstromleistung für die kommerzielle Stromversorgung (18) regeneriert, die umfasst:
eine Schaltschaltung (20), um Gleichstromleistung in Wechselstromleistung umzusetzen, wenn ein Schaltelement (60) angesteuert wird, um zu schalten;
Mittel (34, 78), um ein Schaltsignal zu erzeugen, um den Ansteuerungszeitverlauf des Schaltelements (60) festzulegen;
eine Schaltsteuereinheit (34, 80), um das Schaltelement (60) mit einem Träger mit vorgegebener Frequenz anhand des Schaltsignals anzusteuern; und
eine Leistungsquelleneinheit (90), um Leistung zum Ansteuern des Schaltelements (60) und der Schaltsteuereinheit (34, 80) zu erzeugen;
eine Filterschaltung (102), die ein Durchlassband besitzt, das niedriger als die Trägerfrequenz (fc) des Schaltsignals ist, wobei die Filterschaltung (102) in einer Verdrahtung (98) vorgesehen ist, die eine Schleife bildet, die aus der Leistungsquelleneinheit (90) herausgeführt und in die Leistungsquelleneinheit (90) über einen vorgegebenen Kontakt (30D) zurückgeführt ist, wobei die Verdrahtung (98) aus der Filterschaltung (102) herausgeführt ist und mit dem vorgegebenen Kontakt (30D) verbunden ist;
ein paralleles Aus-Relais [engl.: off-relay] (30), das zwischen der Wechselrichterschaltung (20) und der Netzstromversorgung (18) vorgesehen ist, wobei das parallele Aus-Relais (30) dazu ausgelegt ist, zwischen die Wechselrichterschaltung (20) und die Netzstromversorgung (18) über Kontakte (30A-30D) hiervon geschaltet zu werden, und die Filterschaltung (102) in der Verdrahtung (98) vorgesehen ist, die eine Verbindung zwischen einem der Kontakte (30A-30D) des parallelen Aus-Relais (30) und der Leistungsquelleneinheit (90) herstellt;
**dadurch gekennzeichnet, dass** die Öffnungs- und Schließoperation des parallelen Aus-Relais (30) durch einen Mikrocomputer (58) gesteuert wird und dass in dem Mikrocomputer (58) bestätigt wird, ob das parallele Aus-Relais (30) richtig geöffnet und geschlossen wird, und
**dadurch gekennzeichnet, dass** die Filterschaltung (102) konfiguriert ist, um eine elektromagnetische Welle mit einem Frequenzbereich von 100 kHz bis 1 MHz oder vorzugsweise mit einer Frequenz von 2 MHz oder weniger zu unterdrücken.

2. Systemverbindungs-Wechselrichtervorrichtung nach Anspruch 1, **dadurch gekennzeichnet, dass** für die Steuerung der Öffnungs- und Schließoperation ein Ausgangsanschluss (58A) des Mikrocomputers (58) mit einer Relais-Ansteuerungsschaltung (96) verbunden ist.

3. Systemverbindungs-Wechselrichtervorrichtung nach Anspruch 1 oder 2, **dadurch gekennzeichnet, dass** für die Bestätigung des richtigen Öffnens und Schließens die Verdrahtung (98), die mit einem der Kontakte (30A-30D) des parallelen Aus-Relais (30) verbunden ist, einen Photokoppler (100) aufweist, der mit einem Eingangsanschluss (58B) des Mikrocomputers (58) verbunden ist.

4. Systemverbindungs-Wechselrichtervorrichtung nach einem der Ansprüche 1 bis 3, **dadurch gekennzeichnet, dass** die Trägerfrequenz mindestens mehrere kHz beträgt.

5. Systemverbindungs-Wechselrichtervorrichtung nach Anspruch 4, **dadurch gekennzeichnet, dass** die Filterschaltung (102) unter Verwendung eines troidalen Kerns (104) mit einer Induktivität von mehreren 100 mH oder weniger konfiguriert ist.

## Revendications

1. Dispositif onduleur pour interconnexion de système (14) pour convertir une alimentation à courant continu en une alimentation à courant alternatif proportionnelle en tension et en fréquence à une alimentation commerciale (18) et pour régénérer l'alimentation à courant alternatif en l'alimentation commerciale (18), comprenant :
un circuit de commutation (20) pour convertir une alimentation à courant continu en alimentation à courant alternatif à cause d'un élément de commutation (60) commandé en commutation ;
un moyen (34, 78) pour générer un signal de commutation pour régler un temps de commande de l'élément de commutation (60) ;
une unité de commande de commutation (34, 80) pour commander l'élément de commutation (60) avec une porteuse d'une fréquence prédéterminée sur la base du signal de commutation ; et
une unité de source d'alimentation (90) pour générer l'alimentation pour commander l'élément de commutation (60) et l'unité de commande de commutation (34, 80) ;
un circuit de filtre (102) ayant une bande passante inférieure à la fréquence de porteuse (fc) du signal de commutation, le circuit de filtre (102) étant placé dans un câblage (98) formant une boucle sortie de l'unité de source d'alimentation (90) et retournée à l'unité de source d'alimentation (90) via un contact prédéterminé (30D), le câblage (98) étant sorti du circuit de filtre (102) et raccordé au contact prédéterminé (30D) ;
un relais à état bloqué parallèle (30) placé entre le circuit inverseur (20) et l'alimentation commerciale (18), le relais à état bloqué parallèle (30) étant disposé pour raccorder entre le circuit inverseur (20) et
l'alimentation commerciale (18) via des contacts (30A-30D) de celui-ci et le circuit de filtre (102) étant placé dans le câblage (98) reliant entre un des contacts (30A-30D) du relais à état bloqué parallèle (30) et de l'unité de source d'alimentation (90) ;
**caractérisé en ce que** l'opération d'ouverture et de fermeture du relais à état bloqué parallèle (30) est commandée au moyen d'un microordinateur (58) et que dans le microordinateur (58), une confirmation est faite afin de déterminer si le relais à état bloqué parallèle (30) est correctement ouvert et fermé ; et
**caractérisé en ce que** le circuit de filtre (102) est configuré pour supprimer une onde électromagnétique ayant une gamme de fréquence allant de 100 kHz à 1 MHz ou préférablement ayant une fréquence de 2 MHz ou inférieure.

2. Dispositif onduleur pour interconnexion de système selon la revendication 1, **caractérisé en ce que** pour l'opération d'ouverture et de fermeture, la commande d'une borne de sortie (58A) du microordinateur (58) est raccordée à un circuit de commande de relais (96).

3. Dispositif onduleur pour interconnexion de système selon la revendication 1 ou 2, **caractérisé en ce que** pour une confirmation correctement ouverte et fermée, le câblage (98) étant raccordé à un des contacts (30A-30D) du relais à état bloqué parallèle (30) comprend un photocoupleur (100) raccordé à une borne d'entrée (58B) du microordinateur (58).

4. Dispositif onduleur pour interconnexion de système selon l'une quelconque des revendications 1 à 3, **caractérisé en ce que** la fréquence de porteuse est de plusieurs kHz ou supérieure.

5. Dispositif onduleur pour interconnexion de système selon la revendication 4, **caractérisé en ce que** le circuit de filtre (102) est configuré en utilisant un noyau toroïdal (104) ayant une inductance de plusieurs centaines de mH ou moins.
